# EUROPEAN PATENT APPLICATION

(11) **EP 3 885 178 A1**
(43) Date of publication of application: **29.09.2021**
(21) Application number: 19889386.9
(22) Date of filing: 29.11.2019
(51) Int. Cl.: B60L 50/40, B60L 50/50, B60L 53/00, B60L 55/00, B60L 58/00, H01M 10/42, H01M 10/48, G06Q 30/06, G06Q 50/10

(54) **BATTERY UTILIZATION SYSTEM, STORAGE DEVICE, BATTERY UTILIZATION METHOD, PROGRAM, AND STORAGE MEDIUM**

(30) Priority: 29.11.2018 JP 2018223826
(71) Applicant: HONDA MOTOR CO., LTD., Minato-ku Tokyo 107-8556 (JP)
(72) Inventor: MATSUMOTO Takashi, Wako-shi, Saitama 351-0193 (JP); ENDO Hirotaka, Wako-shi, Saitama 351-0193 (JP)
(74) Representative: Beder, Jens
(86) International application number: PCT/JP2019/046824
(87) International publication number: WO 2020/111243

(57) **Abstract**

A battery utilization system includes a battery removably mounted on an electric power device using electric power and including a memoryin which information is stored and a storing device configured to store the battery. The storing device includes an acquirer configured to acquire update information including control information for controlling the battery and a controller configured to cause the memoryof the stored battery to store the update information acquired by the acquirer.

## Description

### [Technical Field]

The present invention relates to a battery utilization system, a storing device, a battery utilization method, a program, and a storage medium.

Priority is claimed on Japanese Patent Application No. 2018-223826, filed November 29, 2018, the content of which is incorporated herein by reference.

### [Background Art]

In recent years, electric vehicles such as electric vehicles (EVs) and hybrid electric vehicles (HEVs), which travel using electric motors driven with electric power supplied from batteries, have been developed. In the electric vehicles, when a battery, which is a drive source, has run out of power, it is necessary to charge the battery to continue subsequent traveling. In the above system, the battery can be charged at home or at a charging station. Technology for providing advertisements to a user while a battery is being charged at a charging station is being studied.

For example, Patent Document 1 discloses a system and a method in which a charging station records data associated with a user and provides a targeted advertisement to the user.

In recent years, some electric vehicles have used batteries configured to be removable (hereinafter referred to as "removable batteries"). In this way, in the battery sharing service, the user replaces the removable battery at charging stations installed at a plurality of locations. At the charging station, the returned removable battery is charged and stored and the charged removable battery is rented out when another user comes to replace the removable battery. In the above system, for example, a case in which the battery replacement device updates information for controlling the removable battery like firmware so that charging of each removable battery is controlled when the number of types of removable batteries increases is taken into account.

As another example of a movable object from which a battery can be removed, a portable power charging/supplying device including a battery and a power charging/supplying unit in which an accommodation chamber for accommodating the battery is formed is known (see, for example, Patent Document 2).

### [Citation List]

### [Patent Document]

### [Patent Document 1]

Published Japanese Translation No. 2017-528852 of the PCT International Publication

### [Patent Document 2]

Japanese Unexamined Patent Application, First Publication No. 2019-068552

### [Summary of Invention]

### [Technical Problem]

For example, a method of updating information for controlling a battery via a network or updating information when a worker directly performs rewriting is conceivable. However, in the conventional technology, there is a problem that the transmission/reception of information depends on the network environment. When the network environment is a wired connection, it is necessary to install a communication facility and perform wiring work. When a worker rewrites information, there is a problem that labor costs are incurred and the cost and the number of days required for the rewriting work increase in accordance with the number of batteries or the like.

According to an aspect of the present invention, an objective of the present invention is to provide a battery utilization system, a storing device, a battery utilization method, a program, and a storage medium capable of efficiently updating information for controlling a battery.

### [Solution to Problem]

A battery utilization system, a storing device, a battery utilization method, a program, and a storage medium according to the present invention adopt the following configurations.
(1) According to an aspect of the present invention, there is provided a battery utilization system including: a battery removably mounted on an electric power device using electric power and including a memory in which information is stored; and a storing device configured to store the battery, wherein the storing device includes an acquirer configured to acquire update information including control information for controlling the battery; and a controller configured to cause the memory of the stored battery to store the update information acquired by the acquirer.
(2) In the aspect (1), the controller is configured to compare first update information which is the update information stored in the memory of the stored battery with second update information which is the update information acquired by the acquirer, and the controller is configured to update the first update information to the second update information when the second update information is newer than the first update information.
(3) In the aspect (1) or (2), the controller is configured to compare first update information which is the update information stored in the memory of the stored battery with second update information which is the update information acquired by the acquirer, and the controller is configured to update the second update information to the first update information when the first update information is newer than the second update information.
(4) In any one of the aspects (1) to (3), the storing device includes a first storing device and a second storing device different from the first storing device, a first acquirer which is the acquirer of the first storing device is configured to acquire third update information, and, when the first storing device stores the battery including the memory in which fourth update information is stored by a second controller which is the controller of the second storing device, a first controller which is the controller of the first storing device is configured to compare the third update information with the fourth update information and update the fourth update information to the third update information if the third update information is newer than the fourth update information.
(5) In the aspect (4), the first acquirer is configured to acquire the fourth update information as the update information when the fourth update information is newer than the third update information.
(6) In any one of the aspects (1) to (5), the storing device includes a first storing device and a second storing device different from the first storing device, a first acquirer which is the acquirer of the first storing device is configured to acquire third update information, and, when the first storing device stores the battery including the memory in which fourth update information is stored by a second controller which is the controller of the second storing device, a first controller which is the controller of the first storing device is configured to compare the third update information with the fourth update information and the first acquirer is configured to acquire the fourth update information as the update information if the fourth update information is newer than the third update information.
(7) In any one of the aspects (1) to (6), the acquirer further is configured to acquire other update information including control information for controlling the storing device, and the controller is configured to cause another memory of the storing device to store the other update information acquired by the acquirer.
(8) In the aspect (7), the controller is configured to prioritize memory of the update information in the memory over memory of the other update information in the other memory when the acquirer has acquired the update information and the other update information.
(9) In any one of the aspects (1) to (8), the acquirer further is configured to acquire other update information including advertising information capable of being provided to a user who uses the storing device, and the controller further is configured to cause another memory of the storing device to store the other update information acquired by the acquirer.
(10) The battery utilization system according to the aspect (8) or (9) further includes a server configured to communicate with the storing device, wherein the storing device further includes a communicator configured to communicate with the server, wherein the controller is configured to transmit an update history of the other update information acquired by the acquirer to the server via the communicator, and wherein the server is configured to detect the storing device that has not updated the other update information based on the update history received from the storing device.
(11) The battery utilization system according to any one of the aspects (8) to (10) further includes a server configured to communicate with the storing device, wherein the storing device further includes a communicator configured to communicate with the server, wherein the controller is configured to transmit an update history of the update information acquired by the acquirer to the server via the communicator, and wherein the server is configured to detect the battery that has not updated the update information based on the update history received from the storing device.
(12) According to another aspect of the present invention, there is provided a storing device for storing a battery removably mounted on an electric power device using electric power, the storing device including; an acquirer configured to acquire update information including control information for controlling the battery; and a controller configured to cause a memory of the stored battery to store the update information acquired by the acquirer.
(13) According to yet another aspect of the present invention, there is provided a battery utilization method including: a process in which a computer installed in a storing device for storing a battery removably mounted on an electric power device using electric power is configured to acquire update information including control information for controlling the battery; and a process in which the computer is configured to cause a memory of the stored battery to store the acquired update information.
(14) According to still another aspect of the present invention, there is provided a program for causing a computer installed in a storing device for storing a battery removably mounted on an electric power device using electric power to execute: a process of acquiring update information including control information for controlling the battery; and a process of causing a memory of the stored battery to store the acquired update information.
(15) According to still another aspect of the present invention, there is provided a computer-readable storage medium storing the program according to the aspect (14).

### [Advantageous Effects of Invention]

According to any aspect described above, it is possible to efficiently update information for controlling a battery.

### [Brief Description of Drawings]

Fig. 1 is a diagram showing a concept of a battery sharing service adopting a shared battery management system according to the present embodiment.
Fig. 2 is a block diagram showing an example of a configuration of a removable battery according to the present embodiment.
Fig. 3 is a block diagram showing a schematic configuration of a battery replacement device according to the present embodiment.
Fig. 4 is a block diagram showing a schematic configuration of an operation server according to the present embodiment.
Fig. 5 is a diagram showing an example of an update information spreading route according to the present embodiment.
Fig. 6 is a diagram showing an example of a state in which update information is transmitted to a plurality of battery replacement devices and the update information is spread by a plurality of electric motorcycles.
Fig. 7 is a flowchart of an example of a processing procedure performed between the operation server and the battery replacement device according to the present embodiment.
Fig. 8 is a flowchart of an example of a processing procedure performed between the battery replacement device, which has received update information from the operation server, and a removable battery according to the present embodiment.
Fig. 9 is a flowchart of an example of a processing procedure performed between the battery replacement device and the removable battery in an area where the communication environment is poor according to the present embodiment.
Fig. 10 is a sequence diagram of an example of a processing procedure performed by a shared battery management system in a first modified example of the present embodiment.
Fig. 11 is a diagram showing an example of a schematic configuration of a shared battery management system in a second modified example of the present embodiment.
Fig. 12 is a diagram showing an example of a configuration of a portable power supply device in the second modified example of the present embodiment.

### [Description of Embodiments]

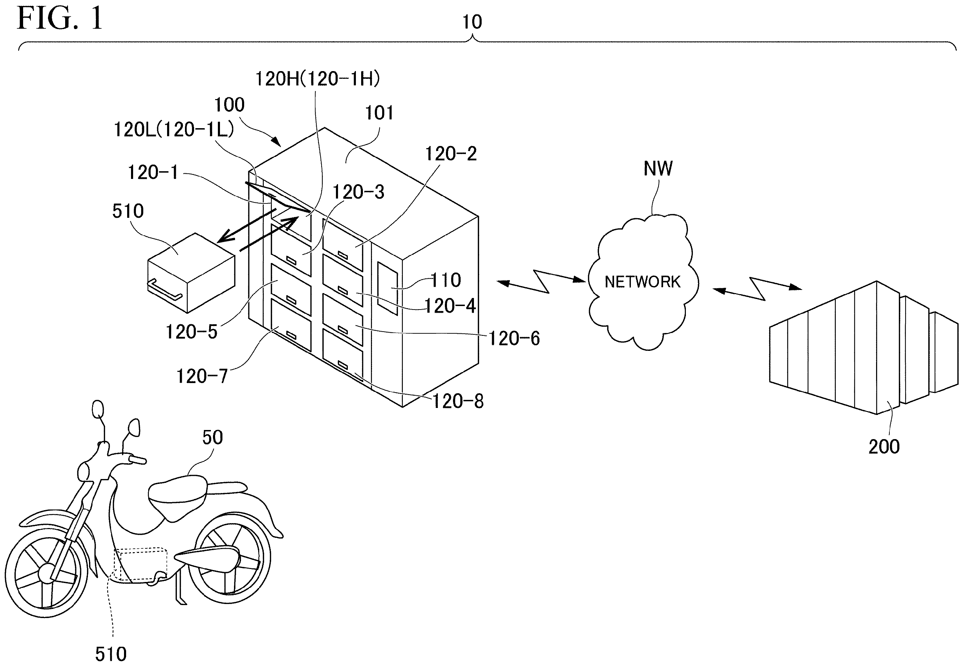

First, an example of an overall configuration of a shared battery management system will be described. Fig. 1 is a diagram showing a concept of a so-called battery sharing service adopting a shared battery management system according to the present embodiment. The shared battery management system is an example of a "battery utilization system."

As shown in Fig. 1, the shared battery management system 10 is configured to include a removable battery 510, a battery replacement device 100, and an operation server 200. Although one operation server 200 can be configured to correspond to a plurality of battery replacement devices 100 in the shared battery management system 10, only one battery replacement device 100 is shown in Fig. 1. In Fig. 1, an electric motorcycle 50 (an electric vehicle), which is an example of a movable device that uses a battery sharing service adopting the shared battery management system 10, is also shown. The removable battery 510 is an example of a "battery," the battery replacement device 100 is an example of a "storing device," and the operation server 200 is an example of a "server."

The electric motorcycle 50 is an electric vehicle that travels using an electric motor driven with electric power supplied from a removable battery 510. The electric motorcycle 50 may be a hybrid electric vehicle that travels according to driving based on a combination of a removable battery 510 and an internal combustion engine such as a diesel engine or a gasoline engine. The electric motorcycle 50 is an example of an "electric power device."

The "electric power device" is not limited to the electric motorcycle 50 and may be, for example, a vehicle (a one-wheel vehicle, a three-wheel vehicle, a four-wheel vehicle, or the like) which can travel with electric power and on which a removable battery 510 can be removably mounted, or an assist-type bicycle. Instead of these vehicle-type movable objects, the "electric power device" may be a portable power charging/supplying device carried by a person or a vehicle described in Japanese Unexamined Patent Application, First Publication No. 2019-068552. Also, the "electric power device" may be a movable robot, an autonomous traveling device, an electric bicycle, an autonomous traveling vehicle, another electric vehicle, a drone flying object, or another electric movable device (electric mobility). Hereinafter, an example in which the "electric power device" is the electric motorcycle 50 will be described.

The removable battery 510 is, for example, a cassette-type power storing device (secondary battery) that is removably mounted on the electric motorcycle 50. At least one removable battery 510 is mounted on one electric motorcycle 50. In the following description, the electric motorcycle 50 will be described as an electric vehicle equipped with one removable battery 510. The removable battery 510 is shared by a plurality of electric vehicles. Identification information (hereinafter referred to as a "battery ID" (battery identification information)) for identifying the removable battery 510 is exclusively assigned to the removable battery 510. The battery ID may be a serial number (a manufacturing number) of the removable battery 510. The removable battery 510 is returned and stored in any one of slots 120-1 to 120-8 of the battery replacement device 100. In the following description, when one of the slots 120-1 to 120-8 is not specified, it is referred to as a slot 120.

The battery replacement device 100 is installed in a charging/replacement station (not shown). For example, charging/replacement stations are installed at a plurality of locations. The battery replacement device 100 reads and stores update information and battery state information stored in the removable battery 510 for each slot 120.

The update information includes, for example, the firmware of the removable battery 510. The update information may further include firmware of the battery replacement device 100, advertisement information displayed by the battery replacement device 100, information representing the update date and time, and the like. The battery state information includes, for example, information such as a battery ID, the number of times of charging, a manufacturing date, a capacity in an initial state, and a charging rate. The firmware is an example of "control information." The update information including the firmware of the removable battery 510 is an example of "other update information" and update information including the advertisement information is another example of the "other update information."

The battery replacement device 100 receives and stores update information from the operation server 200 according to communication via the network NW The battery replacement device 100 performs the update of the firmware of the battery replacement device 100, the update of the firmware of another removable battery 510, and the like based on the stored update information. The battery replacement device 100 creates a battery state list by associating all the battery state information read from each of the slots 120 with a replacement device ID which is the identification information of the battery replacement device 100, and transmits the created battery state list to the operation server 200.

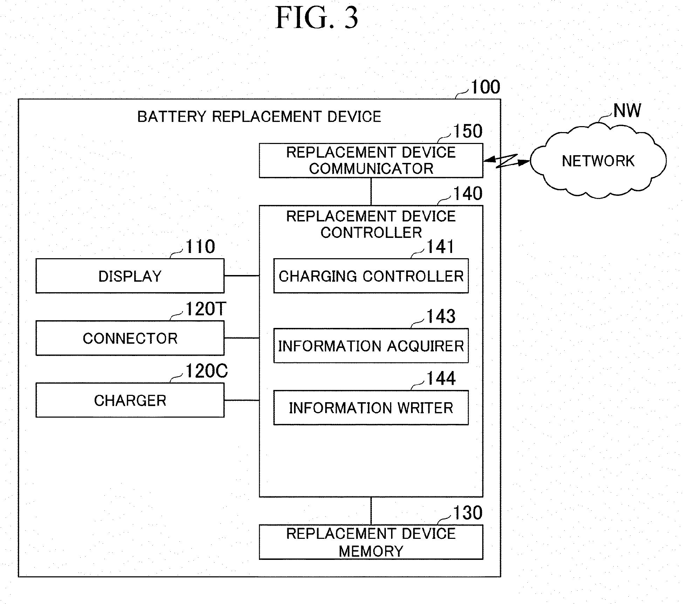

Fig. 1 shows an example of a configuration of the battery replacement device 100. The battery replacement device 100 shown in Fig. 1 includes a display 110 and eight slots 120-1 to 120-8 including a charging function in a housing 101. Each slot 120 includes an accommodation unit 120H and an opening/closing lid 120L. The accommodation unit 120H includes a structure in which an opening is provided on a front surface thereof and the removable battery 510 can be moved in and out of the accommodation unit 120H through the opening. A connector 120T (Fig. 3) for acquiring the battery ID of the removable battery 510 when a connection with the accommodated removable battery 510 is made is provided on a back side of the accommodation unit 120H. The opening/closing lid 120L is a lid for opening/closing the opening on the front surface of the accommodation unit 120H and includes a structure in which the removable battery 510 can be moved in and out of the accommodation unit 120H when the opening is in an open state and the removable battery 510 cannot be moved in and out of the accommodation unit 120H when the opening is in a closed state. According to the above-described structure, each slot 120 can restrict the insertion/detachment or the rental of the removable battery 510 accommodated in the accommodation unit 120H by locking the opening/closing lid 120L in the closed state. That is, the battery replacement device 100 locks the opening/closing lid 120L to prohibit the removable battery 510 from being taken out from the accommodation unit 120H or unlocks the opening/closing lid 120L to permit the removable battery 510 to be taken out from the accommodation unit 120H.

The operation server 200 is a server facility that manages and controls the battery replacement device 100 and the removable battery 510. The operation server 200 transmits the update information to the battery replacement device 100. The operation server 200 receives and stores the battery information list from the battery replacement device 100.

### (Configuration of removable battery 510)

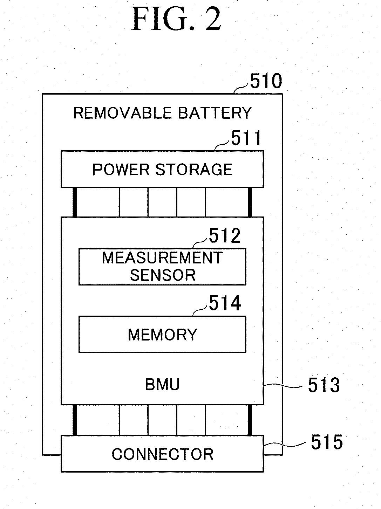

Next, an example of a configuration of the removable battery 510 will be described. Fig. 2 is a block diagram showing an example of the configuration of the removable battery 510 according to the present embodiment. As shown in Fig. 2, the removable battery 510 includes a power storage 511, a battery management unit (BMU) 513, and a connector 515. The BMU 513 includes a measurement sensor 512 and a memory 514.

The power storage 511 is configured to include a storage battery that stores electric power through charging and is discharged with the stored power. As the storage battery included in the power storage 511, for example, a secondary battery such as a lead storage battery or a lithium-ion battery, a capacitor such as an electric double layer capacitor, a composite battery in which a secondary battery and a capacitor are combined, or the like is used.

The measurement sensor 512 is configured to include various types of sensors for measuring the state of the power storage 511. The measurement sensor 512 measures a voltage stored in the power storage 511 using, for example, a voltage sensor. The measurement sensor 512 measures an electric current flowing through the power storage 511 using, for example, an electric current sensor. Also, the measurement sensor 512 measures the temperature at which the power storage 511 is charged or the power storage 511 is discharged using, for example, a temperature sensor. The measurement sensor 512 outputs a measured value representing a measured state of the power storage 511 to a processor on the BMU 513.

The BMU 513 is a battery management unit and controls charging and discharging of the power storage 511. The BMU 513 is configured to include a processor such as, for example, a central processing unit (CPU), and a memory such as, for example, a read only memory (ROM) or a random access memory (RAM), as the memory 514. In the BMU 513, the CPU implements a control function of the power storage 511 by reading and executing a program stored in the memory 514. The BMU 513 causes the memory 514 to store information such as the content of the control performed on the power storage 511 based on the measured value representing the state of the power storage 511 output from the measurement sensor 512. The BMU 513 causes the memory 514 to store update information acquired from the battery replacement device 100.

The memory 514 stores battery state information such as a battery ID assigned to the removable battery 510. The memory 514 stores information of an abnormality or a failure detected by the BMU 513 itself, an abnormality or a failure of the power storage 511 ascertained using the measurement sensor 512, and the like. The memory 514 stores the update information.

The connector 515 is a connector that supplies the electric power stored in the power storage 511 to the electric motor that is the drive source of the electric motorcycle 50 when the removable battery 510 is mounted on the electric motorcycle 50. The connector 515 is connected to a structure that connects to the removable battery 510 provided on the back side of the accommodation unit 120H when the removable battery 510 is accommodated in the slot 120 provided in the battery replacement device 100. The connector 515 is also a connector for exchanging battery state information and update information exchanged between the removable battery 510 and the battery replacement device 100.

### (Configuration of battery replacement device 100)

Subsequently, an example of a configuration of the battery replacement device 100 will be described. Fig. 3 is a block diagram showing a schematic configuration of the battery replacement device 100 according to the present embodiment. As shown in Fig. 3, the battery replacement device 100 includes a display 110, a connector 120T, a charger 120C, a replacement memory 130, a replacement device controller 140, and a replacement device communicator 150. The replacement device controller 140 includes a charging controller 141, an information acquirer 143, and an information writer 144. The replacement device controller 140 is an example of a "first controller" and the replacement device communicator 150 is an example of a "first communicator."

The display 110 is, for example, a liquid crystal display device, an organic electro luminescence (EL) display device, or the like. The display 110 displays image information output by the replacement device controller 140. The image information includes, for example, the number of the slot 120 in which the rentable removable battery 510 is accommodated, a usage fee, an advertisement, and the like. The display 110 includes an inputter based on a touch panel sensor or the like. The touch panel sensor detects a result of an operation performed by the user and outputs the operation result, which has been detected, to the replacement device controller 140.

The connector 120T is a connector including a structure that electrically connects to the connector 515 provided in the accommodated removable battery 510 in the slot 120. The connector 120T is provided, for example, on the back side of the accommodation unit 120H, for each slot 120. Each connector 120T receives and transmits battery state information and update information exchanged between the removable battery 510 accommodated in the corresponding slot 120 and the replacement device controller 140. The connector 120T transmits electric power to and from the removable battery 510. That is, the connector 120T supplies the power storage 511 with electric power for charging. When there are eight slots 120 as shown in Fig. 1, a slot 120-N includes a connector 120T-N.

The charger 120C is a charger that charges the removable battery 510 in accordance with control from the replacement device controller 140 when the removable battery 510 is accommodated in the slot 120 and the connector 515 of the accommodated removable battery 510 and the connector 120T are connected. The charger 120C charges the removable battery 510 by supplying electric power to the power storage 511 of the removable battery 510 via the connector 120T. In the battery replacement device 100, the charger 120C is provided for each slot 120.

The replacement memory 130 stores various information in the battery replacement device 100. The replacement memory 130 stores a program for the replacement device controller 140 to execute the function of the battery replacement device 100. The replacement memory 130 stores information about whether or not the removable battery 510 has been accommodated in each slot 120 and battery state information of the removable battery 510 accommodated in each slot 120. The replacement memory 130 stores update information. The replacement memory 130 stores a replacement device ID.

The replacement device controller 140 controls the entire battery replacement device 100. The replacement device controller 140 is configured to include, for example, a processor such as a CPU. The replacement device controller 140 implements the function of the battery replacement device 100 by reading and executing the program stored in the replacement memory 130. More specifically, the replacement device controller 140 controls the charging and rental of the removable battery 510 accommodated in each of the slots 120, the display of an advertisement, the update of the firmware of the battery replacement device 100, and the update of the firmware of the removable battery 510, and the like.

The information acquirer 143 reads the battery state information and the update information from the removable battery 510 accommodated in the slot 120, i.e., the removable battery 510 stored in the battery replacement device 100, and outputs the battery state information and the update information, which have been read, to the information writer 144.

The information writer 144 causes the replacement memory 130 to store the battery state information and the update information.

The charging controller 141 controls a state of charge of the removable battery 510 for the charger 120C. The charging controller 141 calculates a current charging rate of the removable battery 510 being charged based on a charging time period, an electric current value, and the like, i.e., a current charging rate of the power storage 511 provided in the removable battery 510. The charging controller 141 controls the charger 120C so that charging is completed when the charging of the removable battery 510 has been completed.

The replacement device communicator 150 performs wireless communication with the operation server 200 via the network NW in accordance with control of the replacement device controller 140, and transmits the battery state list to the operation server 200. The replacement device communicator 150 receives update information from the operation server 200 and outputs the received update information to the replacement device controller 140.

### (Configuration of operation server 200)

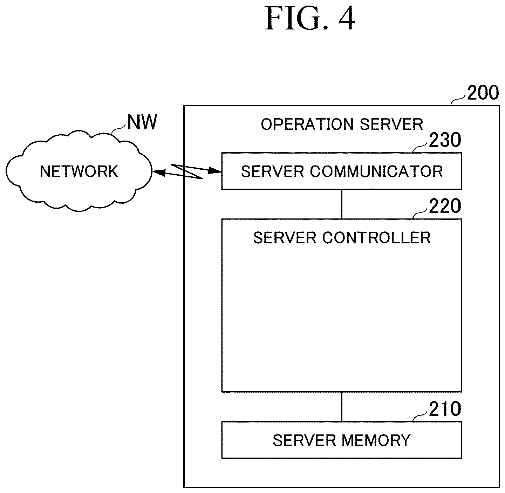

Next, an example of a configuration of the operation server 200 will be described. Fig. 4 is a block diagram showing a schematic configuration of the operation server 200 according to the present embodiment. As shown in Fig. 4, the operation server 200 includes a server memory 210, a server controller 220, and a server communicator 230. The server controller 220 is an example of a "second controller" and the server communicator 230 is an example of a "second communicator."

The server memory 210 stores various information in the operation server 200. The server memory 210 stores the battery information list and the update information. The server memory 210 stores information of a replacement device ID exclusively assigned to the battery replacement device 100.

The server controller 220 controls the entire operation server 200. The server controller 220 is configured to include, for example, a processor such as a CPU. The server controller 220 implements the function of the operation server 200 by reading and executing the program stored in the server memory 210. The server controller 220 causes the server memory 210 to store the battery state list received by the server communicator 230 from the battery replacement device 100. When the update information stored in the server memory 210 has been updated, the server controller 220 transmits the updated update information to the battery replacement device 100 via the server communicator 230.

The server communicator 230 performs wireless communication with the replacement device communicator 150 provided in the battery replacement device 100 via the network NW The server communicator 230 receives the battery state information transmitted from the battery replacement device 100 via the network NW, and outputs a received battery state list to the server controller 220. The server communicator 230 transmits update information output by the server controller 220 to the battery replacement device 100 via the network NW

### (Example of spreading of updated information)

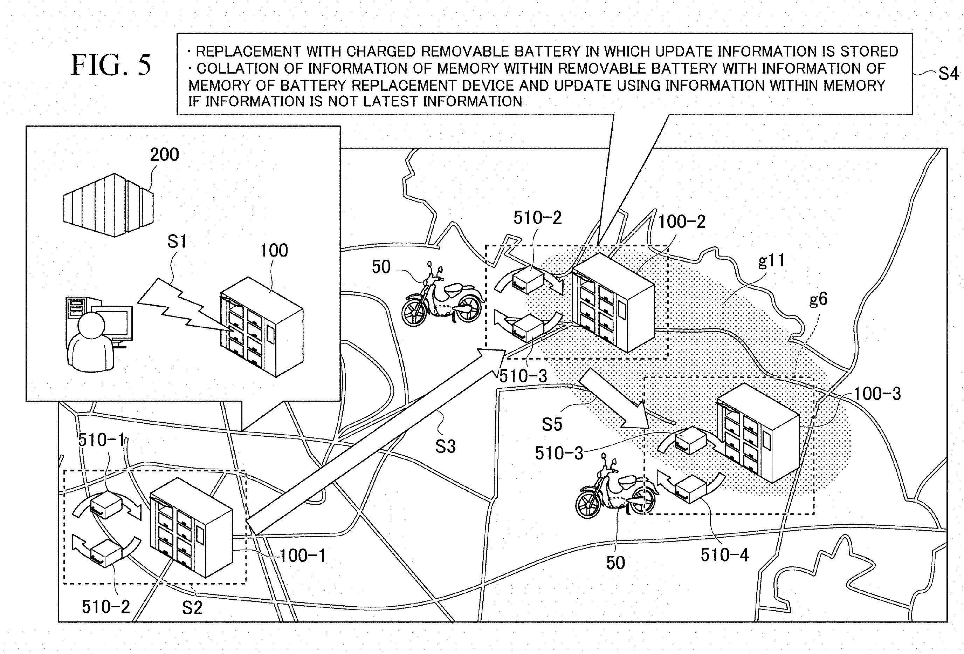

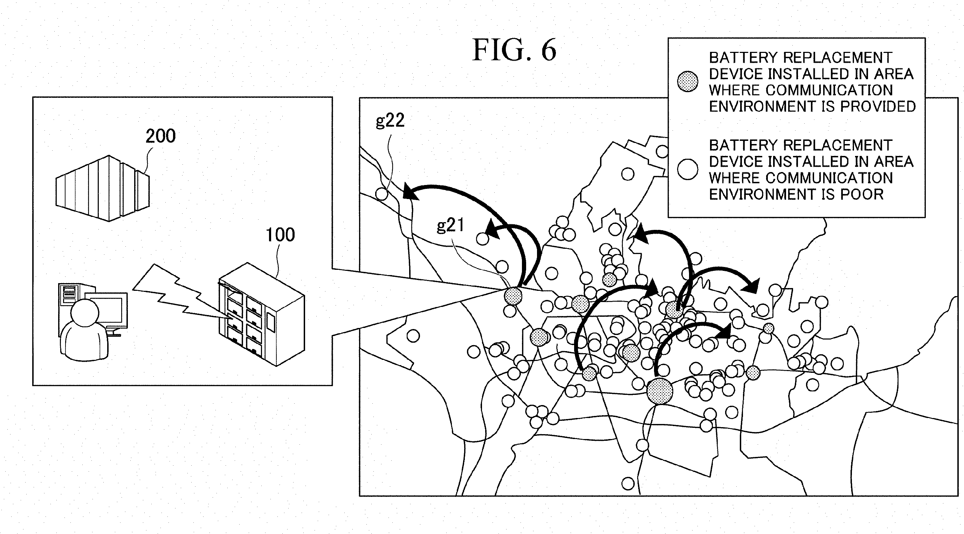

Next, an example of spreading of updated information will be described with reference to Figs. 5 and 6. Fig. 5 is a diagram showing an example of an update information spreading route according to the present embodiment. In Fig. 5, the battery replacement device 100-1 is installed in a place where a communication infrastructure is established. Reference sign g11 represents an area where the communication environment is poor (for example, unstable or slow). The battery replacement devices 100-2 and 100-3 are installed in an area where the communication environment is poor.

(Step S1) A manager of the operation server 200 updates the update information stored in the operation server 200. Subsequently, the operation server 200 transmits the updated update information to the battery replacement device 100-1. Subsequently, the battery replacement device 100-1 updates the update information that has been received.

Subsequently, the battery replacement device 100-1 updates the update information stored in each of the removable batteries 510 accommodated in each of the slots 120 using the updated update information. When the update information includes the firmware of the battery replacement device 100, the battery replacement device 100-1 also updates the firmware of the battery replacement device 100-1. When the update information includes the firmware of the removable battery 510, the battery replacement device 100-1 also updates the firmware of the removable battery 510 accommodated in each of the slots 120.

(Step S2) The user of the electric motorcycle 50 replaces the used removable battery 510-1 with the charged removable battery 510-2 at the charging station where the battery replacement device 100-1 is installed. The charged removable battery 510-2 stores the latest updated update information. As a result, the update information transmitted to the battery replacement device 100-1 is spread to the removable battery 510 accommodated in the battery replacement device 100-1. Subsequently, the battery replacement device 100-1 updates the update information stored in the used removable battery 510-1 and performs control so that the used removable battery 510-1 is charged.

(Step S3) The electric motorcycle 50 travels from the charging station where the battery replacement device 100-1 is installed to the charging station where the battery replacement device 100-2 is installed.

(Step S4) The user of the electric motorcycle 50 replaces the used removable battery 510-2 with the charged removable battery 510-3 at the charging station where the battery replacement device 100-2 is installed. At the time of replacement, the battery replacement device 100-2 acquires battery state information and update information from the returned used removable battery 510-2.

Subsequently, the battery replacement device 100-2 compares the update information acquired from the used removable battery 510-2 with the update information stored in the battery replacement device 100-2. Subsequently, the used battery replacement device 100-2 updates the update information of the returned used removable battery 510-2 using the update information stored in the used battery replacement device 100-2 when the acquired update information is older than the update information stored in the used battery replacement device 100-2. Alternatively, the battery replacement device 100-2 updates the update information stored in the battery replacement device 100-2 when the acquired update information is newer than the update information stored in the battery replacement device 100-2 and updates the update information of the removable battery 510 accommodated in each slot 120 including the returned used removable battery 510-2. Thereby, the battery replacement device 100-2 can rewrite the latest update information to the battery replacement device 100-2 and the accommodated removable battery. As a result, the update information transmitted to the battery replacement device 100-1 is spread to the battery replacement device 100-2 and the removable battery 510 accommodated in the battery replacement device 100-2 without using the communication means. When the update information includes the firmware of the battery replacement device 100, the battery replacement device 100-2 also updates the firmware. When the update information includes the firmware of the removable battery 510, the battery replacement device 100-2 also updates the firmware of the removable battery 510 accommodated in each of the slots 120.

(Step S5) The electric motorcycle 50 travels from the charging station where the battery replacement device 100-2 is installed to the charging station where the battery replacement device 100-3 is installed.

(Step S6) The user of the electric motorcycle 50 replaces a used removable battery 510-3 with a charged removable battery 510-4 at the charging station where the battery replacement device 100-3 is installed. When the removable battery 510 is replaced, the battery replacement device 100-3 performs processing similar to that of step S4. As a result, the update information transmitted to the battery replacement device 100-1 is spread to the battery replacement device 100-3 and the removable battery 510 accommodated in the battery replacement device 100-3 via the battery replacement device 100-2 and the removable battery 510 without using the communication means.

Although an example in which update information is transmitted to one battery replacement device 100 and one electric motorcycle 50 spreads the update information is shown in Fig. 5, the update information is transmitted to a plurality of battery replacement devices 100 in an actual operation and the updated information is spread by a plurality of electric motorcycles 50.

Fig. 6 is a diagram showing an example of a state in which update information is transmitted to a plurality of battery replacement devices 100 and the update information is spread by a plurality of electric motorcycles 50. In Fig. 6, reference sign g21 represents a battery replacement device 100 installed in an area where the communication environment is provided. Reference sign g22 represents a battery replacement device 100 installed in an area where the communication environment is poor.

As shown in Fig. 6, the operation server 200 first transmits the latest update information to the battery replacement device 100 installed in an area (or a location) where the communication environment is provided. The battery replacement device 100, which has received the update information, updates the update information of the removable battery 510 accommodated in the battery replacement device 100. The removable battery 510 whose update information is updated in the above way is rented out and the rented removable battery 510 moves in accordance with the movement of the electric motorcycle 50 driven by the user. As a result, the latest update information is spread to the battery replacement device 100 in each area and the removable battery 510 accommodated in the battery replacement device 100.

Here, if the battery replacement device 100 installed in an area where the communication environment is poor tries to update the update information using the communication means, the communication may not be successful and the update information may not be transmitted. Alternatively, the battery replacement device 100 may not acquire the update information through communication when the base station or the like is not installed. In this case, the worker needs to go to the charging station where the battery replacement device 100 is installed and the worker needs to rewrite the information stored in the battery replacement device 100.

On the other hand, according to the present embodiment, as shown in Fig. 5, it is possible to update the update information without involving the communication means according to traveling of the electric motorcycle 50 and replacement of the used removable battery 510 in the battery replacement device 100. According to the present embodiment, the firmware of the battery replacement device 100 and the firmware of the removable battery 510 can be automatically updated using the firmware included in the update information. That is, according to the present embodiment, the update information can be efficiently updated even in a place where the communication infrastructure is unstable.

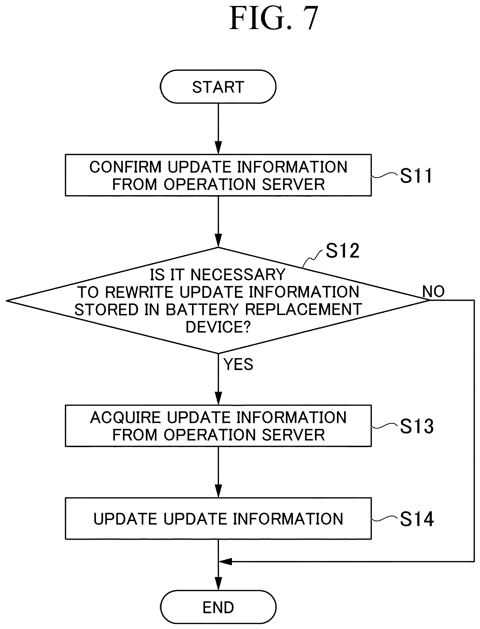

Next, an example of the processing procedure performed between the operation server 200 and the battery replacement device 100 will be described. Fig. 7 is a flowchart of an example of a processing procedure performed between the operation server 200 and the battery replacement device 100 according to the present embodiment. The operation server 200 performs the following process with respect to each of a plurality of battery replacement devices 100, for example, at predetermined time intervals, at a predetermined time, or the like.

(Step S 11) The server controller 220 of the operation server 200 confirms the update information. The update information is stored in the server memory 210 by, for example, a worker.

(Step S12) The server controller 220 of the operation server 200 communicates with the battery replacement device 100 and, for example, acquires an update date and time of the update information stored in the battery replacement device 100. Subsequently, the server controller 220 determines whether or not it is necessary to rewrite (update) the update information stored in the battery replacement device 100 based on whether or not the update information stored in the battery replacement device 100 is the latest update information. When it is determined that it is necessary to rewrite the update information stored in the battery replacement device 100 (step S12; YES), the server controller 220 transmits the update information to the battery replacement device 100 and proceeds to the processing of step S13. When it is determined that it is not necessary to rewrite the update information stored in the battery replacement device 100 (step S12; NO), the server controller 220 ends the process.

(Step S13) The replacement device controller 140 of the battery replacement device 100 acquires the update information transmitted by the operation server 200.

(Step S14) The replacement device controller 140 of the battery replacement device 100 writes the acquired update information to the replacement memory 130 to update the updated information.

Although an example in which the operation server 200 confirms the update date and time of the update information stored in the battery replacement device 100 and transmits the update information to the battery replacement device 100 when the confirmation result does not represent the latest update information has been described in the example shown in Fig. 7, the present invention is not limited thereto. When the update information has been updated, the operation server 200 may transmit the latest update information to all the battery replacement devices 100 capable of communicating with the operation server 200. In this case, the battery replacement device 100, which has received the update information, may be configured to write the received update information to the replacement memory 130 to update the update information or may update the update information by comparing the update date and time of the stored update information with the update date and time of the received update information.

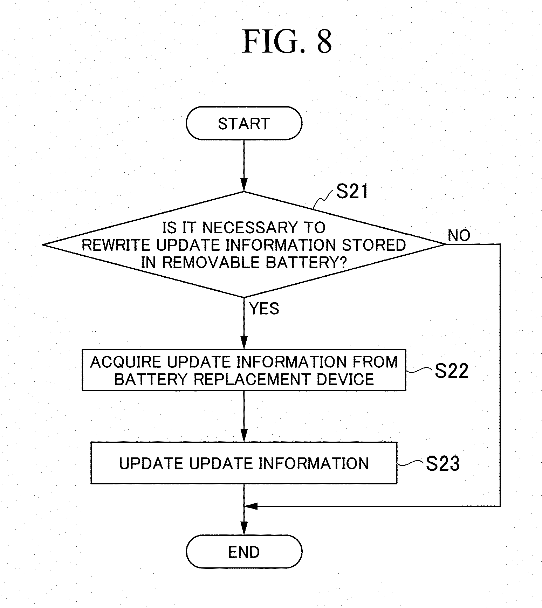

Next, an example of a processing procedure performed between the battery replacement device 100 that has received the update information from the operation server 200 and the removable battery 510 will be described. Fig. 8 is a flowchart of an example of a processing procedure performed between the battery replacement device 100, which have received the update information from the operation server 200, and the removable battery 510 according to the present embodiment. Also, the battery replacement device 100 performs the following process on each of a plurality of removable batteries 510 accommodated in the battery replacement device 100.

(Step S21) The replacement device controller 140 of the battery replacement device 100 acquires the update date and time of the update information stored in the removable battery 510 accommodated in the slot 120. Subsequently, the replacement device controller 140 determines whether or not it is necessary to rewrite (update) the update information stored in the removable battery 510 based on whether or not the update date and time of the update information stored in the removable battery 510 is later than the update date and time of the received update information. When it is determined that it is necessary to rewrite the update information stored in the removable battery 510 (step S21; YES), the replacement device controller 140 outputs the update information to the removable battery 510 and proceeds to the processing of step S22. When it is determined that it is not necessary to rewrite the update information stored in the removable battery 510 (step S21; NO), the replacement device controller 140 ends the process.

(Step S22) The BMU 513 of the removable battery 510 acquires the update information output by the battery replacement device 100.

(Step S23) The BMU 513 of the removable battery 510 writes the acquired update information in the memory 514 to update the update information.

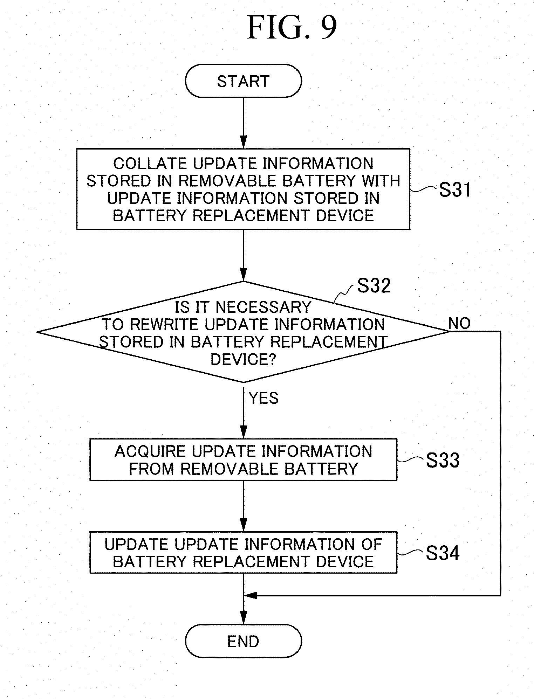

Next, an example of a processing procedure performed between the battery replacement device 100 and the removable battery 510 in an area where the communication environment is poor will be described. Fig. 9 is a flowchart of an example of a processing procedure performed between the battery replacement device 100 and the removable battery 510 in an area where the communication environment is poor according to the present embodiment. The battery replacement device 100 performs the following process with respect to each of the plurality of removable batteries 510 accommodated in the battery replacement device 100.

(Step S31) The replacement device controller 140 of the battery replacement device 100 acquires the update date and time of the update information stored in the removable battery 510 accommodated in the slot 120. Subsequently, the replacement device controller 140 collates whether the update date and time of the update information stored in the removable battery 510 is later than the update date and time of the update information stored in the battery replacement device 100.

(Step S32) The replacement device controller 140 of the battery replacement device 100 determines whether or not it is necessary to rewrite (update) the update information stored in the battery replacement device 100 based on a collation result. For example, the replacement device controller 140 determines that the update is necessary when the update date and time of the update information stored in the removable battery 510 is later than the update date and time of the update information stored in the battery replacement device 100. When it is determined that it is necessary to rewrite the update information stored in the battery replacement device 100 (step S32; YES), the replacement device controller 140 proceeds to the processing of step S33. When it is determined that it is not necessary to rewrite the update information stored in the battery replacement device 100 (step S32; NO), the replacement device controller 140 ends the process.

(Step S33) The replacement device controller 140 of the battery replacement device 100 acquires update information from the removable battery 510.

(Step S34) The replacement device controller 140 of the battery replacement device 100 writes the acquired update information to the replacement memory 130 to update the updated information.

Although an example in which the battery replacement device 100 confirms the update date and time of the update information stored in the removable battery 510 and outputs the update information to the removable battery 510 when a confirmation result does not represent the latest update information has been described in the examples shown in Figs. 8 and 9, the present invention is not limited thereto. When the update information has been updated, the battery replacement device 100 may be configured to output the latest update information to all the removable batteries 510 accommodated in the battery replacement device 100. In this case, the removable battery 510, which has received the update information, may write the received update information to the memory 514 to update the update information, or may update the update information by comparing the update date and time of the stored update information with the update date and time of the received update information.

As described above, according to the present embodiment, the update information (an advertisement for the charging station, firmware, or the like) can be moved by maintaining only a required minimum communication environment (maintaining only another minimum communication environment). As a result, the updated information is spread as described with reference to Figs. 5 and 6. The battery replacement device 100 to which the operation server 200 transmits update information is selected, for example, in accordance with an installation position or a communication environment maintenance state of the battery replacement device 100.

Also, according to the present embodiment, because the update information is spread by moving the removable battery 510, labor costs and capital investment related to the update can be reduced.

Also, according to the present embodiment, update information can be reliably exchanged via the removable battery 510 even in an area where the communication environment is poor. As a result, according to the present embodiment, the dependence of the shared battery management system 10 on the communication infrastructure can be minimized and the communication cost can be reduced.

### (First modified example)

In the above-described embodiment, an example of transmitting update information from the operation server 200 has been described. In the above shared battery management system 10, the used removable battery 510 is moved between a large number of battery replacement devices 100, for example, as shown in Fig. 5.

For example, in Fig. 5, the removable battery 510-2 is first moved from the battery replacement device 100-1 to the battery replacement device 100-2 and subsequently moved from the battery replacement device 100-2 to the battery replacement device 100-3. Subsequently, it is assumed that the removable battery 510-2 is returned to the battery replacement device 100-1 in which the communication environment is provided. At this time, the battery replacement device 100-1 reads battery state information and update information from the returned used removable battery 510-2. In the first modified example, the battery state information includes history information of the battery replacement device 100 to which the removable battery 510-2 has been returned.

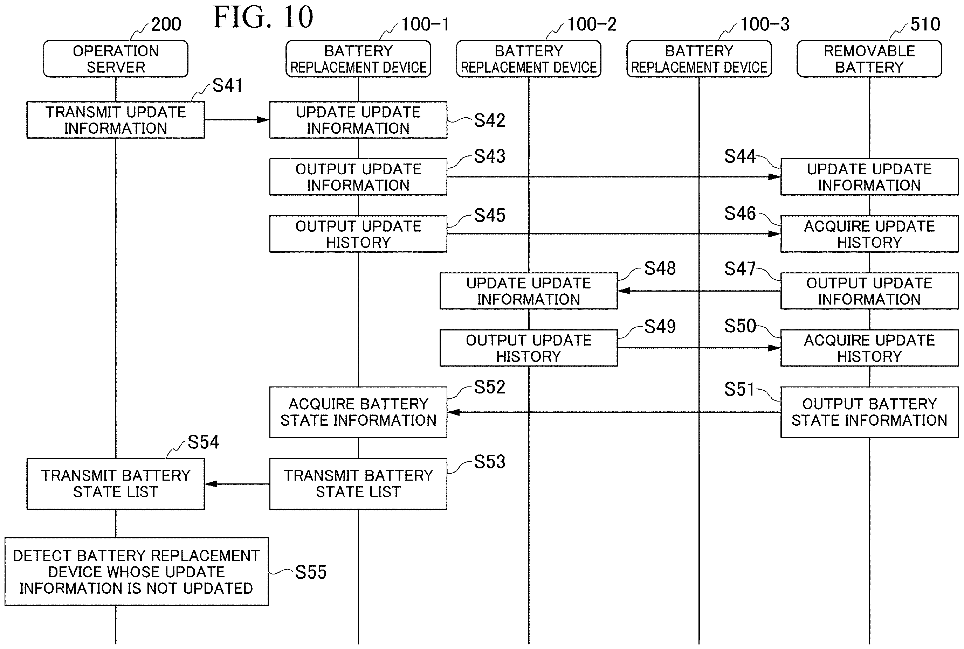

Also, in the example shown in Fig. 10, it is assumed that the battery replacement device 100-1 is installed in an area where the communication environment is provided and the battery replacement devices 100-2 and 100-3 are installed in an area where the communication environment is poor.

A configuration of an operation server 200, a battery replacement device 100, and a removable battery 510 in the first modified example is similar to that of the embodiment.

Next, an example of a processing procedure performed by a shared battery management system 10 in the first modified example will be described. Fig. 10 is a sequence diagram of an example of a processing procedure performed by the shared battery management system 10 in the first modified example according to the present embodiment.

(Step S41) The server controller 220 of the operation server 200 transmits update information to the battery replacement device 100-1.

(Step S42) A replacement device controller 140 of the battery replacement device 100-1 updates update information stored in a replacement memory 130 using the update information that has been received.

Here, it is assumed that the removable battery 510 has been returned to the battery replacement device 100-1. It is assumed that the update date and time of the update information stored in the removable battery 510 is earlier than the update date and time of the update information acquired by the battery replacement device 100-1.

(Step S43) The replacement device controller 140 of the battery replacement device 100-1 outputs the update information to the removable battery 510.

(Step S44) The BMU 513 of the removable battery 510 updates the update information stored in the memory 514 using the acquired update information.

(Step S45) The replacement device controller 140 of the battery replacement device 100-1 outputs an update history to the removable battery 510.

(Step S46) The BMU 513 of the removable battery 510 acquires the update history and stores the acquired update history in the battery state information.

Next, it is assumed that the removable battery 510 has been returned to the battery replacement device 100-2. It is assumed that the update date and time of the update information of the battery replacement device 100-2 is earlier than the update date and time of the update information stored in the removable battery 510.

(Step S47) The BMU 513 of the removable battery 510 outputs the update information to the battery replacement device 100-2. Subsequently, the replacement device controller 140 of the battery replacement device 100-2 acquires update information from the returned removable battery 510.

(Step S48) The replacement device controller 140 of the battery replacement device 100-2 updates the update information stored in the replacement memory 130 using the acquired update information. The replacement device controller 140 compares the update information stored in each of the removable batteries 510 with respect to all the removable batteries 510 accommodated in the battery replacement device 100-2 with the acquired update information. Subsequently, the stored update information is updated to the acquired update information with respect to each of the removable batteries 510 whose stored update information is older than the acquired update information.

(Step S49) The replacement device controller 140 of the battery replacement device 100-2 outputs an update history to the removable battery 510. Subsequently, the replacement device controller 140 updates the update history with respect to all the removable batteries 510 accommodated in the battery replacement device 100-2.

(Step S50) The BMU 513 of the removable battery 510 acquires the update history and stores the acquired update history in the battery state information.

Next, it is assumed that the removable battery 510 has been returned to the battery replacement device 100-1.

(Step S51) The removable battery 510 outputs the update information and information representing the update date and time of the update information included in the update information to the battery replacement device 100-1.

(Step S52) The replacement device controller 140 of the battery replacement device 100-1 acquires battery state information output by the battery replacement device 100-2 and the information representing the update date and time of the update information included in the update information. The battery state information includes an update history (for example, a replacement device ID and a return date and time) of the battery replacement device 100 to which the removable battery 510 has been returned.

(Step S53) The replacement device controller 140 of the battery replacement device 100-1 creates a battery state list by acquiring the battery state information and the information representing the update date and time of the update information included in the update information from each of the removable batteries 510 accommodated in the slots 120 of the battery replacement device 100-1. In the first modified example, the battery state list includes an update history, which is a history of the battery replacement device 100 to which the removable battery 510 has been returned. Subsequently, the replacement device controller 140 transmits the created battery state list to the operation server 200.

(Step S54) The server controller 220 of the operation server 200 receives the battery state list from the battery replacement device 100-1.

(Step S55) The server controller 220 of the operation server 200 detects the battery replacement device 100-3 whose update information (firmware) has not been updated based on the update history included in the received battery information list. The server controller 220 may detect the removable battery 510 whose update information (firmware) has not been updated based on the update history included in the battery information list.

As described above, in the first modified example, the information stored in the removable battery 510 also moves in accordance with the movement of the removable battery 510. In the information stored in the removable battery 510, information representing the date and time when the battery replacement device 100 has been returned, information representing the date and time when the update information has been updated from the battery replacement device 100, information representing the date and time when the update information has been output to the battery replacement device 100, and the like are stored as an update history. As described above, in the first modified example, the battery replacement device 100 is configured to transmit the updated and stored update history to the operation server 200 when the removable battery 510 has been returned to the battery replacement device 100 installed in the area where the communication environment is provided.

Thereby, according to the first modified example, the operation server 200 can detect the battery replacement device 100 or the removable battery 510 whose update information has not been updated based on the update history. Also, according to the first modified example, the update information can be updated by the worker going to update the battery replacement device 100-3 whose update information has not been updated. Here, when the first modified example is not applied, it is necessary to update the update information by the worker going to perform an update process with respect to all the battery replacement devices 100 installed in the area where the communication environment is poor. On the other hand, according to the first modified example, because a replacement device ID of the battery replacement device whose update information has not been updated can be detected based on the update history, it is possible to identify the battery replacement device 100 whose update information has not been updated. As a result, according to the modified example, the time and labor cost required for updating the updated information can be significantly reduced and the updated information can be updated efficiently.

### (Second modified example)

Although an example of the electric motorcycle 50 or the like has been described as an example of the movable device in the above-described embodiment and the first modified example, the present invention is not limited thereto. The movable device can also be used in a portable power supply device or the like used outdoors or the like.

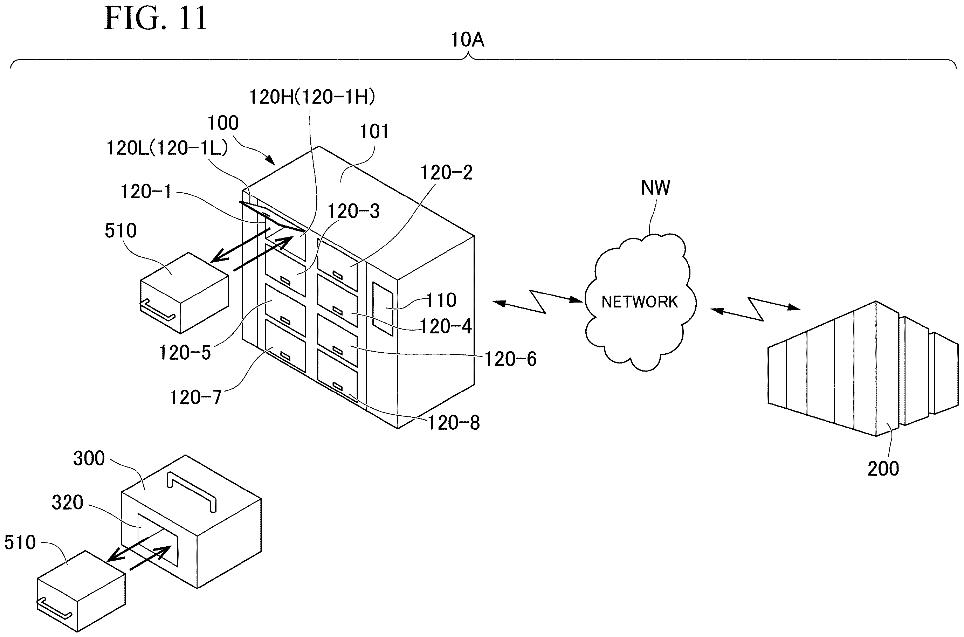

Fig. 11 is a diagram showing an example of a schematic configuration of a shared battery management system 10A in a second modified example of the present embodiment. As shown in Fig. 11, the shared battery management system 10A is configured to include a removable battery 510, a battery replacement device 100, an operation server 200, and a portable power supply device 300 (a movable device).

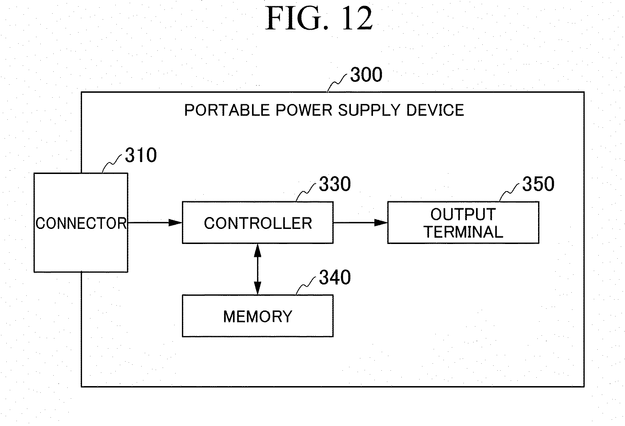

As shown in Fig. 11, the portable power supply device 300 includes a slot 320. The removable battery 510 is accommodated in the slot 320. Also, a connector 310 (see Fig. 12) is provided in the back of the slot 320 or the like. The portable power supply device 300 supplies electric power supplied from the removable battery 510 accommodated in the slot 320 to electric equipment or the like.

The configuration of the removable battery 510 is similar to that of Fig. 2. The configuration of the battery replacement device 100 is similar to that of Fig. 3. The configuration of the operation server 200 is similar to that of Fig. 4. Fig. 12 is a diagram showing an example of a configuration of the portable power supply device 300 in the second modified example of the present embodiment. As shown in Fig. 12, the portable power supply device 300 includes a connector 310, a controller 330, a memory 340, and an output terminal 350.

The connector 310 is a connector associated with the removable battery 510. The connector 310 outputs the electric power supplied from the removable battery 510 to the controller 330. The connector 310 acquires the update information stored in the memory 514 of the removable battery 510 and outputs the acquired update information to the controller 330. The acquired update information includes, for example, the capacity of the battery, the charging rate, and the like. The acquired information may include the firmware of the portable power supply device 300.

The controller 330 causes the memory 340 to store the update information acquired by the connector 310. The controller 330 controls the electric power supplied from the removable battery 510 so that the electric power is supplied to electric equipment (not shown) connected to the output terminal 350.

The memory 340 stores the firmware required for controlling the portable power supply device 300. The memory 340 stores the update information acquired from the removable battery 510.

The output terminal 350 is a plug-in connector for wiring to which the electric equipment (not shown) is connected.

Next, an example in which the portable power supply device 300 is used will be described. First, the user replaces the used removable battery 510 with a charged removable battery at a first charging station (not shown) in which the first battery replacement device 100 is installed. It is assumed that the above first charging station is installed in an area where the communication environment is provided. That is, it is assumed that the update information stored in the memory 514 of the replaced removable battery 510 is the latest information.

Subsequently, the user takes the portable power supply device 300 accommodating the removable battery 510 to the destination (for example, a campsite). Subsequently, because the power of the removable battery 510 has been used up as a usage result in the campsite, the user replaces the used removable battery 510 with a charged removable battery at a second charging station (not shown) where the second battery replacement device 100 is installed. It is assumed that the second charging station is installed in an area where the communication environment is poor. That is, it is assumed that the update information stored in the memory 514 of the removable battery 510 replaced at the second charging station is not the latest information.

The second battery replacement device 100 acquires the latest update information written by the first battery replacement device 100 from the returned used removable battery 510. The second battery replacement device 100 uses the acquired update information to update the update information stored in each of all the removable batteries 510 accommodated in the second battery replacement device 100 or the update information of the second battery replacement device100.

As described above, even in the second modified example, the updated information can be spread with the movement of the removable battery 510 accommodated in the portable power supply device 300 which is carried.

For example, the portable power supply device 300 may be rented out as a set with the charged removable battery 510 at a charging station (not shown) in an area where the communication environment is provided. Even in this case, it is possible to spread the update information in accordance with movement of the removable battery 510 accommodated in the portable power supply device 300 which is carried when the user replaces the removable battery 510 in an area where the communication environment is poor near the campsite.

Although the campsite has been described as an example of the place where the portable power supply device 300 is used in the above-described example, the present invention is not limited thereto. The portable power supply device 300 may be used indoors or the like in an area where an electric power situation is poor.

Although the example in which the operation server 200 transmits the latest update information to the battery replacement device 100 installed in the area where the communication environment is provided has been described in the first modified example and the second modified example of the embodiment described above, the present invention is limited thereto. For example, when it is not necessary to update the update information immediately, the worker may manually update the latest update information, for example, with respect to the battery replacement device 100 for which the number of users is large. Even in this case, the latest update information can be spread by moving the removable battery 510 accommodated in the battery replacement device 100 whose update information has been updated to the latest update information.

Also, the battery replacement device 100 in the above-described embodiment may prioritize the update of the firmware of the removable battery 510 over the update of the firmware of the battery replacement device 100 when the update information of the firmware of the removable battery 510 and the update information of the firmware of the battery replacement device 100 have been acquired at the same time. That is, when the replacement device controller 140 of the battery replacement device 100 has simultaneously acquired the firmware of the removable battery 510 and the firmware of the battery replacement device 100, a process in which the memory 514 of the removable battery 510 is allowed to store the firmware of the removable battery 510 may be prioritized over a process in which the replacement memory 130 (an example of "another memory") is allowed to store the firmware of the battery replacement device 100.

Also, it is assumed that a replacement device controller 140A of a battery replacement device 100A has already acquired the update information from the operation server 200 and a removable battery 510X is stored in the battery replacement device 100A. The memory 514 of the removable battery 510X stores update information stored in a replacement device controller 140B of a battery replacement device 100B different from the battery replacement device 100A. In this case, the replacement device controller 140A of the battery replacement device 100A compares update information (hereinafter referred to as update information A) acquired from the operation server 200 with update information (hereinafter referred to as update information B) stored in the memory 514 of the removable battery 510. When the update information B is newer than the update information A, the replacement device controller 140A acquires the update information B from the memory 514 of the removable battery 510.

Also, all or a part of a process to be performed by the shared battery management system 10 (or 10A) may be performed by recording a program for implementing all or some of the functions of the shared battery management system 10 (or 10A) according to the present invention on a computer-readable recording medium and causing a computer system to read and execute the program recorded on the recording medium. Also, the "computer system" used here is assumed to include an operating system (OS) and hardware such as peripheral devices. Also, the "computer system" is assumed to include a homepage providing environment (or displaying environment) when a World Wide Web (WWW) system is used. The "computer-readable recording medium" refers to a storing device, including a flexible disk, a magnetooptical disc, a read only memory (ROM), a portable medium such as a compact disc (CD)-ROM, and a hard disk embedded in the computer system. Further, the "computer-readable recording medium" is assumed to include a computer-readable recording medium for retaining the program for a given time period as in a volatile memory (a random access memory (RAM)) inside the computer system including a server and a client when the program is transmitted via a network such as the Internet or a communication circuit such as a telephone circuit.

Also, the above-described program may be transmitted from a computer system storing the program in a storing device or the like via a transmission medium or transmitted to another computer system by transmission waves in a transmission medium. Here, the "transmission medium" for transmitting the program refers to a medium including a function of transmitting information, like a network (a communication network) such as the Internet or a communication circuit (a communication line) such as a telephone circuit. Also, the above-described program may be a program for implementing some of the above-described functions. Further, the above-described program may be a program capable of implementing the above-described function in combination with a program already recorded on the computer system, i.e., a so-called differential file (differential program).

The above-described embodiments can be expressed as follows.
(1) According to an aspect of the present invention, there is provided a shared battery management system (10) including: a battery replacement device (100) including a memory (the replacement memory 130); and a removable battery (510) removably mounted on a movable device (the electric motorcycle 50 or the portable power supply device 300), shared by a plurality of movable devices, and including a memory (514), wherein the battery replacement device acquires update information including at least one of pieces of information provided to a user by firmware of the battery replacement device, firmware of the removable battery, and the battery replacement device, causes the memoryof the battery replacement device to store the acquired update information, and causes the memoryof the removable battery to store the update information when the removable battery is accommodated in the battery replacement device.
   According to the above-described (1), the battery replacement device is configured to cause the removable battery to store update information. Thereby, according to (1), because it is possible to spread the update information via the removable battery when the removable battery storing the update information is moved to another battery replacement device, it is possible to efficiently update the update information of the removable battery or the battery replacement device.
(2) According to an aspect of the present invention, in the shared battery management system, the battery replacement device may compare update information stored in the memoryof the battery replacement device with the update information stored in the memoryof the removable battery, update the update information stored in the memoryof the removable battery to the update information stored in the memoryof the battery replacement device when the update information stored in the memoryof the battery replacement device is newer than the update information stored in the memoryof the removable battery, and update the update information stored in the memoryof the battery replacement device to the update information stored in the memoryof the removable battery when the update information stored in the memoryof the removable battery is newer than the update information stored in the memoryof the battery replacement device.
   According to the above-described (2), because it is possible to update the update information to new update information by comparing the update information stored in the removable battery with the update information stored in the battery replacement device, it is possible to efficiently update the update information of the removable battery or the battery replacement device.
(3) According to an aspect of the present invention, the shared battery management system may further include another battery replacement device including a memory, wherein, when the removable battery is accommodated in the battery replacement device, the other battery replacement device may acquire the update information from the memoryof the removable battery, compare the acquired update information with update information stored in the memoryof the other battery replacement device, determine whether or not the update information stored in the memoryof the removable battery is to be updated based on a comparison result, and determine whether or not the update information stored in the memoryof the battery replacement device is to be updated based on the comparison result.
   Also, according to the above-described (3), when the removable battery has been moved to the other battery replacement device, the update information is allowed to be updated in another removable battery based on a result of comparing the update information stored in the movable battery with the update information stored in the battery replacement device. Thereby, according to (3), it is possible to efficiently update the update information of the removable battery or the battery replacement device because it is possible to spread the update information via the removable battery.
(4) According to an aspect of the present invention, in the shared battery management system, when the memoryof the other battery replacement device stores the update information and the removable battery is accommodated in the other battery replacement device, the other battery replacement device may compare the update information stored in the memoryof the removable battery with the update information stored in the memoryof the other battery replacement device, update the update information stored in the memoryof the other battery replacement device to the update information stored in the memoryof the removable battery when the update information stored in the memoryof the removable battery is newer than the update information stored in the memoryof the other battery replacement device, and update the update information stored in the memoryof the removable battery to the update information stored in the memoryof the other battery replacement device when the update information stored in the memoryof the other battery replacement device is newer than the update information stored in the memoryof the removable battery.
   According to the above-described (4), because it is possible to update the update information to new update information by comparing the update information stored in the removable battery with the update information stored in the battery replacement device, it is possible to efficiently update the update information of the removable battery or the battery replacement device.
(5) According to an aspect of the present invention, the shared battery management system may further include an operation server configured to mutually communicate with the battery replacement device, wherein the memoryof the removable battery may store a history of the battery replacement device in which the update information stored in the memoryof the removable battery is updated or read, the battery replacement device may acquire the history stored in the memoryof the removable battery from the removable battery when the removable battery has been accommodated in the battery replacement device and transmit the acquired history to the operation server, and the operation server may detect the battery replacement device in which the update information has not been updated based on the history acquired from the battery replacement device.

According to the above-described (5), because the battery replacement device is configured to acquire the updated history from the removable battery and transmit the updated history to the operation server, it is possible to detect the battery replacement device in which the update information has not been updated based on the history received by the operation server.

Although modes for carrying out the present invention have been described above using the embodiments, the present invention is not limited to the embodiments and various modifications and replacements can be applied without departing from the spirit and scope of the present invention.

### [Reference Signs List]

- 10, 10A: Shared battery management system (battery utilization system)
- 100, 100-1, 100-2, 100-3: Battery replacement device (storing device)
- 200: Operation server
- 510: Removable battery
- 120, 120-1 to 120-8: Slot
- 110: Display
- 120T: Connector
- 120C: Charger
- 130: Replacement memory
- 140: Replacement device controller
- 150: Replacement device communicator
- 141: Charging controller
- 143: Information acquirer
- 144: Information writer
- 210: Server memory
- 220: Server controller
- 230: Server communicator
- 511: Power storage
- 512: Measurement sensor
- 513: BMU
- 514: Memory
- 515: Connector
- 50: Electric motorcycle (electric power device)
- 300: Portable power supply device (electric power device)
- 310: Connector
- 320: Slot
- 330: Controller
- 340: Memory
- 350: Output terminal

## Claims

1. A battery utilization system comprising:
a battery removably mounted on an electric power device using electric power and comprising a memory in which information is stored; and
a storing device configured to store the battery,
wherein the storing device comprises
an acquirer configured to acquire update information comprising control information for controlling the battery; and
a controller configured to cause the memory of the stored battery to store the update information acquired by the acquirer.

2. The battery utilization system according to claim 1,
wherein the controller is configured to compare first update information which is the update information stored in the memoryof the stored battery with second update information which is the update information acquired by the acquirer, and
wherein the controller is configured to update the first update information to the second update information when the second update information is newer than the first update information.

3. The battery utilization system according to claim 1 or 2,
wherein the controller is configured to compare first update information which is the update information stored in the memoryof the stored battery with second update information which is the update information acquired by the acquirer, and
wherein the controller is configured to update the second update information to the first update information when the first update information is newer than the second update information.

4. The battery utilization system according to any one of claims 1 to 3,
wherein the storing device includes a first storing device and a second storing device different from the first storing device,
wherein a first acquirer which is the acquirer of the first storing device is configured to acquire third update information, and
wherein, when the first storing device stores the battery comprising the memoryin which fourth update information is stored by a second controller which is the controller of the second storing device, a first controller which is the controller of the first storing device is configured to compare the third update information with the fourth update information and update the fourth update information to the third update information if the third update information is newer than the fourth update information.

5. The battery utilization system according to claim 4,
wherein the first acquirer is configured to acquire the fourth update information as the update information when the fourth update information is newer than the third update information.

6. The battery utilization system according to any one of claims 1 to 5,
wherein the storing device includes a first storing device and a second storing device different from the first storing device,
wherein a first acquirer which is the acquirer of the first storing device is configured to acquire third update information, and
wherein, when the first storing device stores the battery comprising the memoryin which fourth update information is stored by a second controller which is the controller of the second storing device, a first controller which is the controller of the first storing device is configured to compare the third update information with the fourth update information and the first acquirer is configured to acquire the fourth update information as the update information if the fourth update information is newer than the third update information.

7. The battery utilization system according to any one of claims 1 to 6,
wherein the acquirer further is configured to acquire other update information comprising control information for controlling the storing device, and
wherein the controller is configured to cause another memoryof the storing device to store the other update information acquired by the acquirer.

8. The battery utilization system according to claim 7, wherein the controller is configured to prioritize memoryof the update information in the memoryover memoryof the other update information in the other memorywhen the acquirer has acquired the update information and the other update information.

9. The battery utilization system according to any one of claims 1 to 8,
wherein the acquirer further is configured to acquire other update information comprising advertising information capable of being provided to a user who uses the storing device, and
wherein the controller further is configured to cause another memoryof the storing device to store the other update information acquired by the acquirer.

10. The battery utilization system according to claim 8 or 9, further comprising a server configured to communicate with the storing device,
wherein the storing device further comprises a communicator configured to communicate with the server,
wherein the controller is configured to transmit an update history of the other update information acquired by the acquirer to the server via the communicator, and
wherein the server is configured to detect the storing device that has not updated the other update information based on the update history received from the storing device.

11. The battery utilization system according to any one of claims 8 to 10, further comprising a server configured to communicate with the storing device,
wherein the storing device further comprises a communicator configured to communicate with the server,
wherein the controller is configured to transmit an update history of the update information acquired by the acquirer to the server via the communicator, and
wherein the server is configured to detect the battery that has not updated the update information based on the update history received from the storing device.

12. A storing device for storing a battery removably mounted on an electric power device using electric power, the storing device comprising;
an acquirer configured to acquire update information comprising control information for controlling the battery; and
a controller configured to cause a memoryof the stored battery to store the update information acquired by the acquirer.

13. A battery utilization method comprising:
a process in which a computer installed in a storing device for storing a battery removably mounted on an electric power device using electric power is configured to acquire update information comprising control information for controlling the battery; and
a process in which the computer is configured to cause a memoryof the stored battery to store the acquired update information.

14. A program for causing a computer installed in a storing device for storing a battery removably mounted on an electric power device using electric power to execute:
a process of acquiring update information comprising control information for controlling the battery; and
a process of causing a memoryof the stored battery to store the acquired update information.

15. A computer-readable storage medium storing the program according to claim 14.
